# EUROPEAN PATENT APPLICATION

(11) **EP 4 697 008 A1**
(43) Date of publication of application: **18.02.2026**
(21) Application number: 24854044.5
(22) Date of filing: 15.04.2024
(51) Int. Cl.: G01N 15/0227, C21B 5/00, C22B 1/16, C22B 1/20, G01N 21/17

(54) **INFORMATION PROCESSING DEVICE, INFORMATION PROCESSING METHOD, SINTERED ORE MANUFACTURING METHOD, BLAST FURNACE OPERATION METHOD, COKE MANUFACTURING METHOD, AND PROGRAM**

(30) Priority: 14.08.2023 JP 2023132148
(71) Applicant: JFE Steel Corporation, Tokyo, 100-0011 (JP)
(72) Inventor: TSUBOI Toshiki, Tokyo 100-0011 (JP); MIZUNO Takuyo, Tokyo 100-0011 (JP)
(74) Representative: Grünecker Patent- und Rechtsanwälte PartG mbB
(86) International application number: PCT/JP2024/015044
(87) International publication number: WO 2025/037452

(57) **Abstract**

An information processing apparatus (20) includes a controller configured to acquire observation data obtained at each observation time by use of a sensor (30) to observe a surface layer of a deposited raw material (12) that is sequentially conveyed, calculate an index related to a particle diameter of each particle contained in the deposited raw material (12) for each observation time using the acquired observation data, acquire measurement data obtained at each measurement time corresponding to each observation time by measuring a state of the deposited raw material (12), correct the calculated index for the observation time corresponding to each measurement time, using the acquired measurement data, and output the corrected index for each observation time.

## Description

### TECHNICAL FIELD

The present disclosure relates to an information processing apparatus, an information processing method, a sintered ore manufacturing method, a blast furnace operation method, a coke manufacturing method, and a program.

### BACKGROUND

In manufacturing processes utilizing raw materials such as minerals, the particle diameter, particle shape, or particle size distribution of the raw materials affect the operation of the manufacturing process. Therefore, it is necessary to measure the particle diameter, particle shape, or particle size distribution of the raw material in advance. Particularly in blast furnaces, it is important to determine the particle size distribution of raw materials such as ore or coke, as this affects the ventilation inside the furnace.

Conventionally, periodic sampling of raw materials and sieve analysis have been performed. However, since the analysis takes time, it is difficult to reflect the results in real time on blast furnace operations. Therefore, demand exists for technology that can measure the particle size distribution of raw materials in real time.

A known method for measuring the particle size distribution of raw materials in real time involves using a camera or laser rangefinder to observe the image or shape of the raw materials on the conveyor belt. For example, in the method disclosed in Patent Literature (PTL) 1, the distance from the laser rangefinder to the raw material on the conveyor is measured, and unevenness data (surface profile data) of the raw material is extracted. By performing image processing on the unevenness data, the particle size distribution of the surface layer is calculated. The calculated particle size distribution is corrected to match the particle size distribution measured in advance using sieves.

### CITATION LIST

### Patent Literature

PTL 1: WO 2019/193971 A1

### SUMMARY

### (Technical Problem)

The deposited raw material does not exhibit uniform particle size throughout; instead, particle size becomes non-uniform depending on location. That is, in deposited raw material, particle size segregation occurs. When the particle size distribution of the surface layer is calculated, the calculated particle size distribution therefore differs from the particle size distribution of the entire layer, including hidden layers. It is thus necessary to determine in advance a parameter representing the relationship between the particle size distribution of the surface layer and the particle size distribution of the entire layer, and then use the parameter to estimate the particle size distribution of the entire layer from the calculated particle size distribution of the surface layer.

The relationship between the particle size distribution of the surface layer and the particle size distribution of the entire layer, including the underlying layers, changes sequentially depending on the state of the raw material, such as its dimensions or composition. Therefore, simply calculating the difference between the particle size distribution measured using a sieve in advance and the calculated particle size distribution, as in conventional methods, makes it difficult to achieve high-precision correction.

It is an aim of the present disclosure to measure an index related to the particle diameter of deposited raw material with high precision.

### (Solution to Problem)

(1) An information processing apparatus according to an embodiment of the present disclosure comprises a controller configured to:
   acquire observation data obtained at each observation time by use of a sensor to observe a surface layer of a deposited raw material that is sequentially conveyed;
   calculate an index related to a particle diameter of each particle contained in the deposited raw material for each observation time, using the acquired observation data;
   acquire measurement data obtained at each measurement time corresponding to each observation time by measuring a state of the deposited raw material;
   correct the calculated index for the observation time corresponding to each measurement time, using the acquired measurement data; and
   output the corrected index for each observation time.
(2) An information processing apparatus according to an embodiment of the present disclosure is the information processing apparatus according to (1), wherein
   the controller is configured to correct the index according to a dimension of the deposited raw material determined from the measurement data.
(3) An information processing apparatus according to an embodiment of the present disclosure is the information processing apparatus according to (2), wherein
   the dimension of the deposited raw material includes a layer thickness of the deposited raw material.
(4) An information processing apparatus according to an embodiment of the present disclosure is the information processing apparatus according to (3), wherein
   the controller is configured to:
   acquire, as the observation data, distance data obtained by measuring a distance from the sensor to the surface layer of the deposited raw material; and
   use the distance data also as the measurement data.
(5) An information processing apparatus according to an embodiment of the present disclosure is the information processing apparatus according to (1), wherein
   the controller is configured to:
   acquire, as the measurement data, a camera image obtained by imaging the surface layer of the deposited raw material; and
   correct the index according to a brightness of the camera image.
(6) An information processing apparatus according to an embodiment of the present disclosure is the information processing apparatus according to (5), wherein
   the controller is configured to use the camera image also as the observation data.
(7) An information processing apparatus according to an embodiment of the present disclosure is the information processing apparatus according to (1), wherein
   the controller is configured to acquire, as the measurement data, data obtained by measuring a conveyance amount of the deposited raw material.
(8) An information processing apparatus according to an embodiment of the present disclosure is the information processing apparatus according to (1), wherein
   the controller is configured to acquire, as the measurement data, data obtained by measuring a composition of the deposited raw material.
(9) An information processing apparatus according to an embodiment of the present disclosure is the information processing apparatus according to (8), wherein
   the composition of the deposited raw material includes a moisture content of the deposited raw material.
(10) An information processing method according to an embodiment of the present disclosure comprises:
   acquiring, by an information processing apparatus, observation data obtained at each observation time by use of a sensor to observe a surface layer of a deposited raw material that is sequentially conveyed;
   calculating, by the information processing apparatus, an index related to a particle diameter of each particle contained in the deposited raw material for each observation time, using the acquired observation data;
   acquiring, by the information processing apparatus, measurement data obtained at each measurement time corresponding to each observation time by measuring a state of the deposited raw material;
   correcting, by the information processing apparatus, the calculated index for the observation time corresponding to each measurement time, using the acquired measurement data; and
   outputting, by the information processing apparatus, the corrected index for each observation time.
(11) A sintered ore manufacturing method according to an embodiment of the present disclosure comprises:
   adjusting a blending ratio of at least one type of sintering blend raw material among three types of sintering blend raw materials comprising an iron-containing raw material, an auxiliary raw material, and a carbon-containing raw material, using the index for each observation time outputted by the information processing method according to (10).
(12) A sintered ore manufacturing method according to an embodiment of the present disclosure comprises:
   adjusting at least one operating condition of a granulator among three operating conditions comprising a rotation speed, a residence time, and an added moisture, using the index for each observation time outputted by the information processing method according to (10).
(13) A sintered ore manufacturing method according to an embodiment of the present disclosure comprises:
   adjusting at least one operating condition of a raw material charging device among three operating conditions comprising a drum feeder rotation speed, a chute angle, and a drum chute rotation speed, using the index for each observation time outputted by the information processing method according to (10).
(14) A blast furnace operation method according to an embodiment of the present disclosure comprises:
   adjusting operating conditions of a blast furnace into which raw material is charged, using the index for each observation time outputted by the information processing method according to (10).
(15) A coke manufacturing method according to an embodiment of the present disclosure comprises:
   adjusting a rotation speed of a coal pulverizer, using the index for each observation time outputted by the information processing method according to (10).
(16) A program according to an embodiment of the present disclosure is configured to cause a computer to execute operations comprising:
   acquiring observation data obtained at each observation time by use of a sensor to observe a surface layer of a deposited raw material that is sequentially conveyed;
   calculating an index related to a particle diameter of each particle contained in the deposited raw material for each observation time, using the acquired observation data;
   acquiring measurement data obtained at each measurement time corresponding to each observation time by measuring a state of the deposited raw material;
   correcting the calculated index for the observation time corresponding to each measurement time, using the acquired measurement data; and
   outputting the corrected index for each observation time.

### (Advantageous Effect)

According to the present disclosure, an index related to the particle diameter of deposited raw material can be measured with high precision.

### BRIEF DESCRIPTION OF THE DRAWINGS

In the accompanying drawings:
FIG. 1 is a diagram illustrating a configuration of a measurement system according to an embodiment of the present disclosure;
FIG. 2 is a block diagram illustrating a configuration of an information processing apparatus according to an embodiment of the present disclosure;
FIG. 3 is a flowchart illustrating operations of the information processing apparatus according to an embodiment of the present disclosure;
FIG. 4A is a diagram illustrating an example of distance data for granulated particles as an image;
FIG. 4B is a diagram illustrating the result of detecting particles from the distance data in FIG. 4A;
FIG. 4C is a diagram illustrating an example of a camera image of ore;
FIG. 4D is a diagram illustrating the results of detecting particles from the camera image in FIG. 4C;
FIG. 5A is a graph illustrating the relationship between the difference between the sieve analysis value and the measured value for the weight ratio of a specific particle size category, obtained for the distance data of the granulated particles, and the layer thickness;
FIG. 5B is a graph illustrating the relationship between the difference between the sieve analysis value and the measured value for the weight ratio of a specific particle size category, obtained for the distance data of the granulated particles, and the brightness;
FIG. 5C is a graph illustrating the relationship between the difference between the sieve analysis value and the measured value for the weight ratio of a specific particle size category, obtained for the distance data of the granulated particles, and the conveyance amount;
FIG. 5D is a graph illustrating the relationship between the difference between the sieve analysis value and the measured value for the weight ratio of a specific particle size category, obtained for camera images of ore, and the layer thickness;
FIG. 5E is a graph illustrating the relationship between the difference between the sieve analysis value and the measured value for the weight ratio of a specific particle size category, obtained for camera images of ore, and the brightness;
FIG. 5F is a graph illustrating the relationship between the difference between the sieve analysis value and the measured value for the weight ratio of a specific particle size category, obtained for camera images of ore, and the conveyance amount;
FIG. 6A is a graph illustrating the correlation between the sieve analysis value and the uncorrected measured value for the weight ratio of a specific particle size category, obtained for the distance data of the granulated particles;
FIG. 6B is a graph illustrating the correlation between the sieve analysis value and the measured value corrected according to the layer thickness for the weight ratio of a specific particle size category, obtained for the distance data of the granulated particles;
FIG. 6C is a graph illustrating the correlation between the sieve analysis value and the measured value corrected according to the brightness for the weight ratio of a specific particle size category, obtained for the distance data of the granulated particles;
FIG. 6D is a graph illustrating the correlation between the sieve analysis value and the measured value corrected according to the conveyance amount for the weight ratio of a specific particle size category, obtained for the distance data of the granulated particles;
FIG. 6E is a graph illustrating the correlation between the sieve analysis value and the uncorrected measured value for the weight ratio of a specific particle size category, obtained for camera images of ore;
FIG. 6F is a graph illustrating the correlation between the sieve analysis value and the measured value corrected according to the layer thickness for the weight ratio of a specific particle size category, obtained for camera images of ore;
FIG. 6G is a graph illustrating the correlation between the sieve analysis value and the measured value corrected according to the brightness for the weight ratio of a specific particle size category, obtained for camera images of ore;
FIG. 6H is a graph illustrating the correlation between the sieve analysis value and the measured value corrected according to the conveyance amount for the weight ratio of a specific particle size category, obtained for camera images of ore;
FIG. 7A is a graph illustrating the correlation between the average sieve analysis value and the uncorrected measured value, obtained for the distance data of the granulated particles;
FIG. 7B is a graph illustrating the correlation between the average sieve analysis value and the measured value corrected according to the layer thickness, obtained for the distance data of the granulated particles;
FIG. 7C is a graph illustrating the correlation between the average sieve analysis value and the measured value corrected according to the brightness, obtained for the distance data of the granulated particles;
FIG. 7D is a graph illustrating the correlation between the average sieve analysis value and the measured value corrected according to the conveyance amount, obtained for the distance data of the granulated particles;
FIG. 7E is a graph illustrating the correlation between the average sieve analysis value and the uncorrected measured value, obtained for camera images of ore;
FIG. 7F is a graph illustrating the correlation between the average sieve analysis value and the measured value corrected according to the layer thickness, obtained for camera images of ore;
FIG. 7G is a graph illustrating the correlation between the average sieve analysis value and the measured value corrected according to the brightness, obtained for camera images of ore; and
FIG. 7H is a graph illustrating the correlation between the average sieve analysis value and the measured value corrected according to the conveyance amount, obtained for camera images of ore.

### DETAILED DESCRIPTION

An embodiment of the present disclosure will be described below with reference to the drawings.

In each drawing, identical or equivalent parts are labeled with the same reference numeral. In the description of the present embodiment, a description of identical or equivalent parts will be omitted or simplified as appropriate.

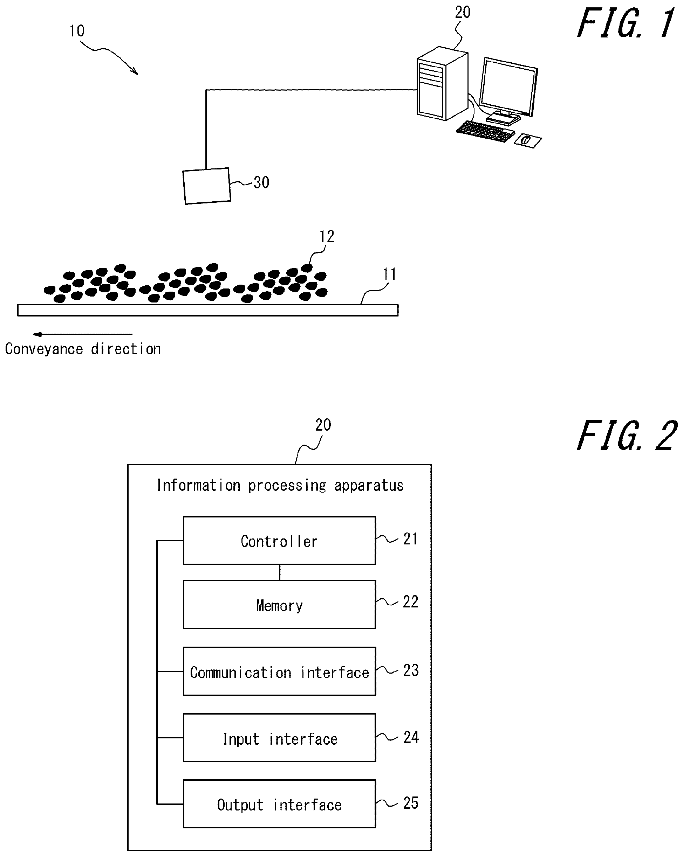

The configuration of a measurement system 10 according to the present embodiment will be described with reference to FIG. 1.

The measurement system 10 includes an information processing apparatus 20 and a sensor 30. The measurement system 10 may further include other sensors.

The information processing apparatus 20 can communicate with the sensor 30 either directly or via a network such as a LAN or the Internet. "LAN" is an abbreviation for local area network. The information processing apparatus 20 may be capable of communicating with other sensors either directly or via a network such as a LAN or the Internet.

As an example of a process to which the present embodiment is applied, a sintering machine in the steel industry and a conveyor 11 for transporting the granulated particles used in the sintering machine are illustrated. However, the present embodiment is also applicable to other processes. Granulated particles, which are one of the raw materials used in the steel industry, are illustrated as an example of the deposited raw material 12. However, the deposited raw material 12 may also, for example, be coke, sintered ore, pellets, limestone, rock, coal, or fine ore, in addition to the ore described later.

The information processing apparatus 20 is a general-purpose computer such as a PC, a server computer such as a cloud server, a microcomputer installed in a mobile device such as a smartphone or tablet, or a dedicated computer. "PC" is an abbreviation for personal computer. The information processing apparatus 20 is a device for measuring the particle diameter of the deposited raw material 12. The information processing apparatus 20 calculates the particle diameter of the deposited raw material 12 from distance data indicating the distance to the deposited raw material 12 as measured by the sensor 30. Alternatively, the information processing apparatus 20 may calculate the particle diameter of the deposited raw material 12 from an image captured by the sensor 30. The information processing apparatus 20 corrects the calculated particle diameter value or the index calculated from the particle diameter value according to the state of the deposited raw material 12. The state of the deposited raw material 12 refers to the conditions that can be measured over time for the deposited raw material 12. Such conditions include, for example, operating conditions or raw material conditions. The operating conditions include, for example, the state of raw material deposition. The state of raw material deposition refers to, for example, the angle of repose, layer thickness, or widthwise spread of raw material deposited on the conveyor 11 after discharge from the raw material storage hopper or after transfer onto the conveyor 11. The angle of repose of a material is the maximum angle of inclination at which the material spontaneously stabilizes when piled up. The layer thickness of the raw material refers to the height dimension of the raw material. The widthwise spread of the raw material refers to the width dimension of the raw material. The raw material conditions refer to the composition of the raw material itself, such as the contained moisture. Use of the information processing apparatus 20 enables high-precision measurement of the particle diameter of all layers of the deposited raw material 12, including the lower layers, even when the state of the deposited raw material 12 changes.

The sensor 30 is a two-dimensional laser rangefinder. The laser rangefinder irradiates a laser beam in a line along the width direction of the conveyor 11 to measure the distance to the granulated particles, one line at a time. The granulated particles are transported and are in motion on the conveyor 11. Therefore, the laser rangefinder measures the distance to the granulated particles in a line at a fixed measurement cycle. By integrating the measurements of these lines, three-dimensional shape data of the granulated particles is obtained. The above method is a technique for acquiring the three-dimensional shape of the object being measured using a method known as the light-section method. A conventional laser rangefinder and data processing means may be used for this purpose. The laser rangefinder preferably has a measurement range equal to the width of conveyor 11, enabling measurement of the entirety of the granulated particles transported by the conveyor 11, i.e., the entire surface. A shorter measurement cycle is more preferable. The measurement cycle is set to 4 kHz in the present embodiment. The sensor 30 may use devices other than a laser rangefinder, such as a stereo camera system using two cameras, a distance measuring camera utilizing a Time-of-Flight (ToF) method, or simply a camera that captures visible light images. "ToF" is an abbreviation for Time of Flight.

Referring to FIG. 2, the configuration of the information processing apparatus 20 according to the present embodiment will be described.

The information processing apparatus 20 includes a controller 21, a memory 22, a communication interface 23, an input interface 24, and an output interface 25.

The controller 21 includes at least one processor, at least one programmable circuit, at least one dedicated circuit, or any combination thereof. The processor is a general-purpose processor such as a CPU or a GPU or a dedicated processor that is dedicated to specific processing. "CPU" is an abbreviation for central processing unit. "GPU" is an abbreviation for graphics processing unit. Programmable circuits include, for example, FPGAs. "FPGA" is an abbreviation for field-programmable gate array. The dedicated circuit is, for example, an ASIC. "ASIC" is an abbreviation for application specific integrated circuit. The controller 21 executes processes related to the operation of the information processing apparatus 20 while controlling each component of the information processing apparatus 20.

The memory 22 includes at least one semiconductor memory, at least one magnetic memory, at least one optical memory, or any combination thereof. Semiconductor memory includes, for example, RAM, ROM, or flash memory. "RAM" is an abbreviation for random access memory. "ROM" is an abbreviation for read only memory. RAM is, for example, SRAM or DRAM. "SRAM" is an abbreviation for static random access memory. "DRAM" is an abbreviation for dynamic random access memory. ROM is, for example, EEPROM. "EEPROM" is an abbreviation for electrically erasable programmable read-only memory. Flash memory is, for example, an SSD. "SSD" is an abbreviation for solid-state drive. Magnetic memory is, for example, an HDD. "HDD" is an abbreviation for hard disk drive. The memory 22 functions as, for example, a main storage device, an auxiliary storage device, or a cache memory. The memory 22 stores data to be used for operations of the information processing apparatus 20 and data obtained by the operations of the information processing apparatus 20.

The communication interface 23 includes at least one communication module. The communication module is a module compatible with, for example, wired LAN standards such as Ethernet^{®} (Ethernet is a registered trademark in Japan, other countries, or both), wireless LAN standards such as IEEE 802.11, mobile communication standards such as LTE, 4G standards, or 5G standards, or other such communication standards. "IEEE" is an abbreviation for the Institute of Electrical and Electronics Engineers. "LTE" is an abbreviation for Long Term Evolution. "4G" is an abbreviation for 4^{th} generation. "5G" is an abbreviation for 5^{th} generation. The communication interface 23 communicates with the sensor 30. The communication interface 23 may communicate with other sensors. The communication interface 23 receives data to be used for the operations of the information processing apparatus 20 and transmits data obtained by the operations of information processing apparatus 20.

The input interface 24 includes at least one input device. Input devices include, for example, physical keys, capacitive keys, pointing devices, a touchscreen integrated with the display, cameras, or microphones. The input interface 24 accepts operations for inputting data used in the operations of the information processing apparatus 20. The input interface 24 may be connected to the information processing apparatus 20 as an external input device instead of being provided within the information processing apparatus 20. As a connection interface, interfaces compliant with standards such as USB, HDMI^{®}, or Bluetooth^{®} (HDMI and Bluetooth are each a registered trademark in Japan, other countries, or both) may be used. "USB" is an abbreviation for Universal Serial Bus. "HDMI^{®}" is an abbreviation for High-Definition Multimedia Interface.

The output interface 25 includes at least one output device. Output devices include, for example, displays, printers, or speakers. The display is, for example, an LCD or an organic EL display. "LCD" is an abbreviation for liquid crystal display. "EL" is an abbreviation for electroluminescent. The output interface 25 outputs data obtained through the operations of information processing apparatus 20. The output interface 25 may be connected to the information processing apparatus 20 as an external output device instead of being provided within the information processing apparatus 20. As a connection interface, interfaces compliant with standards such as USB, HDMI^{®}, or Bluetooth^{®} may be used.

The functions of the information processing apparatus 20 are realized by executing a program according to the present embodiment on the processor serving as the controller 21. That is, the functions of the information processing apparatus 20 can be realized by software. The program causes a computer to execute the operations of the information processing apparatus 20, thereby causing the computer to function as the information processing apparatus 20. That is, the computer functions as the information processing apparatus 20 by executing the operations of the information processing apparatus 20 in accordance with the program.

The program may be stored on a non-volatile computer-readable medium. Non-volatile computer-readable media include, for example, flash memory, magnetic recording devices, optical disks, magneto-optical recording media, or ROM. The program is distributed by, for example, selling, transferring, or lending portable media such as SD cards, DVDs, or CD-ROMs on which the program is stored. "SD" is an abbreviation for Secure Digital. "DVD" is an abbreviation for digital versatile disc. "CD-ROM" is an abbreviation for compact disc read only memory. The program may be distributed by storing the program in a server storage and transferring the program from the server to other computers. The program may be provided as a program product.

The computer temporarily stores a program recorded on a portable medium or transferred from a server, for example, in a main storage device. The computer then uses a processor to read the program stored in the main storage device and execute processing in accordance with the read program. The computer may read the program directly from the portable medium and execute processing in accordance with the program. The computer may execute processing in accordance with the received program each time the program is transferred from the server to the computer. The processing may be executed using an ASP-type service, which achieves functionality solely through execution instructions and result retrieval, without transferring the program from the server to the computer. "ASP" stands for Application Service Provider. The program encompasses information used for processing by a computer and equivalents to a program. For example, data that is not a direct instruction for a computer but has the nature of specifying computer processing falls under the category of "equivalents to a program".

Some or all of the functions of the information processing apparatus 20 may be implemented by programmable circuits or dedicated circuits serving as the controller 21. That is, some or all of the functions of the information processing apparatus 20 may be realized by hardware.

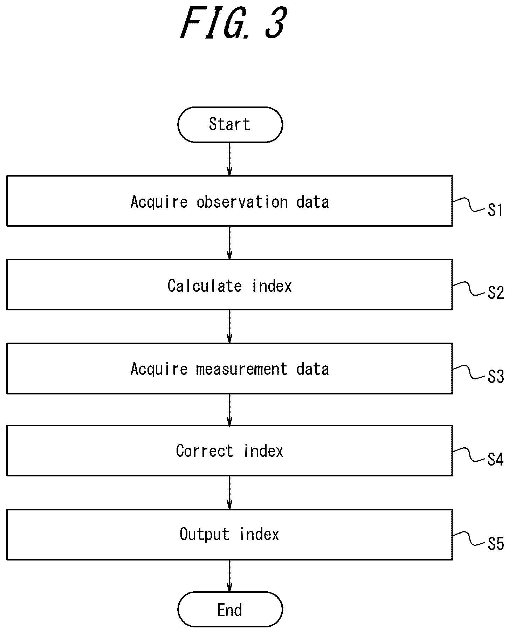

Referring to FIG. 3, the operation of the information processing apparatus 20 according to the present embodiment will be described. The operations described below correspond to the information processing method according to the present embodiment. Specifically, the information processing method according to the present embodiment includes the steps S1 to S5 illustrated in FIG. 3.

In S1, the controller 21 acquires observation data Xi obtained at each observation time by use of the sensor 30 to observe the surface layer of the deposited raw material 12 that is sequentially conveyed. Specifically, the controller 21 receives the observation data Xi from the sensor 30 via the communication interface 23.

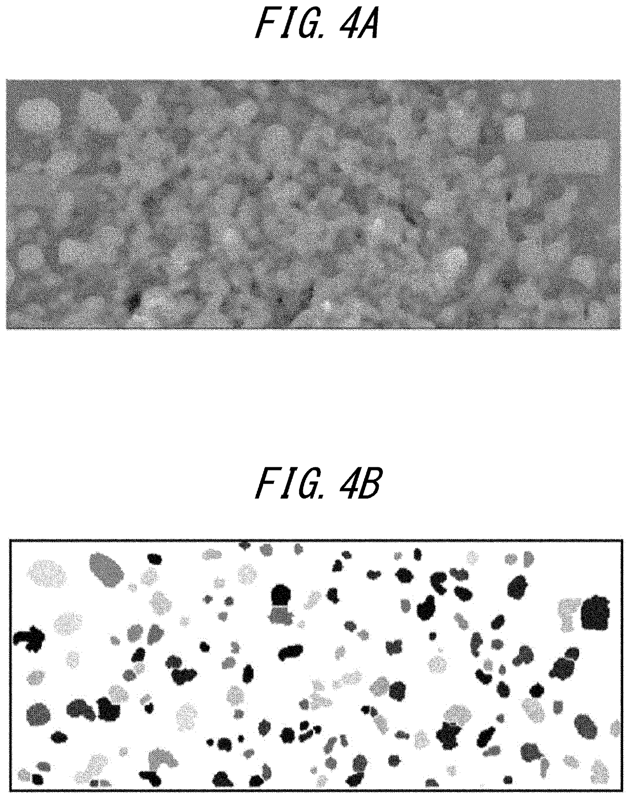

In the present embodiment, the controller 21 acquires distance data obtained by measuring the distance from the sensor 30 to the surface layer of the deposited raw material 12 as the observation data Xi. FIG. 4A is an image illustrating a top-down view of three-dimensional granulated particle profile data obtained by a two-dimensional laser rangefinder. In this image, the whiter a pixel is in grayscale, the greater the height, indicating a shorter distance to the rangefinder. The horizontal dimension is 500 pixels in the laser width direction. One pixel is 0.3 mm. The vertical dimension is 200 pixels in the conveyance direction of the conveyor 11. One pixel is 0.3 mm. The height resolution is 5 µm. The granulated particles on the conveyor 11 are deposited and transported. The data typically acquired is only a single set of three-dimensional shape data. To calculate the particle diameter of granulated particles, it is necessary to detect and identify each individual particle. By applying signal processing to the profile data containing the surface irregularities of these granulated particles, particle separation processing is performed on each individual granulated particle. By counting the number of particles for each particle size of granulated particles separated by particle separation processing and creating a histogram, it becomes possible to calculate the particle diameter. Methods for detecting and separating these particles and calculating their particle diameter include known methods such as the method described in Reference 1 below. FIG. 4B illustrates the particle separation results. As illustrated in FIG. 4B, good detection of individual particles is possible.
[Reference 1] Matthew J. Thurley, "Automated Online Measurement of Particle Size Distribution using 3D Range Data," IFAC Proceedings Volumes, 2009, 42, 134-139

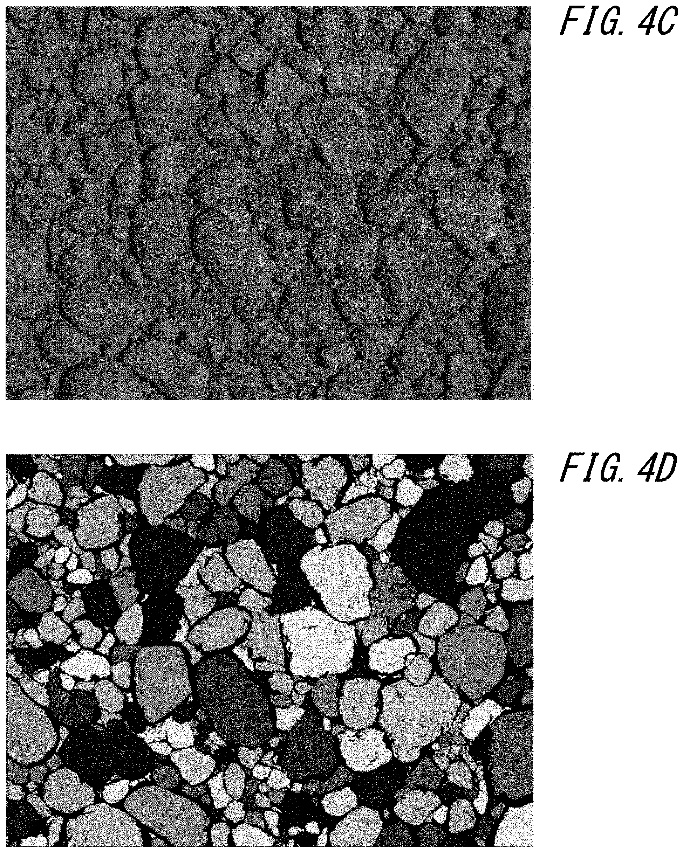

The controller 21 may acquire camera images obtained by imaging the surface layer of the deposited raw material 12 as the observation data Xi. A camera was used instead of a laser rangefinder as the sensor 30, and ore was used instead of granulated particles as the deposited raw material 12. The results of applying a general particle separation method as described in Reference 1 are illustrated in FIGS. 4C and 4D. FIG. 4C is a captured image of the ore. The pixel dimensions of this image are 1280 × 1024. One pixel is approximately 1 mm. FIG. 4D illustrates the particle separation results, displaying individual particles in grayscale. As illustrated in FIG. 4D, good detection of individual particles is possible even from simple camera images, without utilizing distance data obtained using a laser rangefinder.

In S2, the controller 21 calculates an index Zi related to the particle diameter of each particle contained in the deposited raw material 12 for each observation time, using the observation data Xi acquired in S1. The index Zi may be the particle diameter itself or an index calculated from the particle diameter, such as the average diameter.

In S3, the controller 21 acquires measurement data Yi obtained at each measurement time corresponding to each observation time by measuring the state of the deposited raw material 12. Each measurement time may be either before or after the corresponding observation time. Specifically, the controller 21 receives the measurement data Yi from the sensor 30 or other sensors via the communication interface 23.

In the present embodiment, the controller 21 also uses the distance data acquired in S1 as the measurement data Yi. Alternatively, the controller 21 may acquire camera images obtained by imaging the surface layer of the deposited raw material 12 as the measurement data Yi. In the case of acquiring a camera image instead of the distance data in S1, the controller 21 may also use the camera image as the measurement data Yi. Alternatively, the controller 21 may acquire data obtained by measuring the conveyance amount of the deposited raw material 12 as the measurement data Yi. Alternatively, the controller 21 may acquire data obtained by measuring the composition of the deposited raw material 12 as the measurement data Yi. The composition of the deposited raw material 12 includes, for example, the moisture content of the deposited raw material 12. The moisture content of the deposited raw material 12 can be measured using a moisture meter.

In step S4, the controller 21 corrects the index Zi, calculated in step S2, for the observation time corresponding to each measurement time using the measurement data Yi acquired in step S3.

In the present embodiment, the controller 21 corrects the index Zi according to a dimension of the deposited raw material 12 determined from the measurement data Yi. The dimension of the deposited raw material 12 includes, for example, the layer thickness of the deposited raw material 12. Alternatively, in the case of acquiring a camera image in S3, the controller 21 may correct the index Zi according to the brightness of the camera image.

In step S5, the controller 21 outputs the index Zi for each observation time as corrected in step S4. Specifically, the controller 21 transmits the index Zi for each observation time via the communication interface 23 to the device controlling the process or to the user terminal managing the process. Alternatively, the controller 21 displays, prints, or audibly outputs the index Zi for each observation time via the output interface 25.

Generally, when transported by the conveyor 11, the raw material is deposited and transported. Therefore, the sensor 30 can only measure the surface layer of the raw material. However, the particle size distribution of the entire layer, including the hidden lower layer, is not completely identical to that of the surface layer, but rather segregation occurs. For example, since small particles tend to be easily hidden, a situation may arise in which larger particles predominate in the surface layer while smaller particles predominate in the lower layer. To eliminate this segregation effect, it is necessary to estimate the particle size distribution of the entire layer from the particle size distribution of the surface layer. For example, it is conceivable to sample all of the raw material across the width of the conveyor 11, determine the true particle size distribution of the entire layer, and pre-calculate the relationship with the measured particle size distribution of the surface layer. By using the parameter indicating that relationship and the measured particle size distribution of the surface layer, it becomes possible to determine the particle size distribution of the entire layer in real time. However, this parameter changes when operating conditions or raw material conditions change. During operation, operating conditions and raw material conditions are constantly changing. According to the present embodiment, incorporating operating conditions or raw material conditions enables high-precision correction.

An example is described in which correction was performed using either layer thickness, which is one index representing the deposition state among the operating conditions, or an index correlated with layer thickness. We discovered that the relationship between the particle size of the surface layer and the particle size of the entire layer, including the underlying layers, changes due to variations in layer thickness, which is one index representing the deposition state, and indexes correlated with layer thickness. We demonstrated that high-precision particle diameter measurement is achievable by performing correction based on this discovery.

The laser rangefinder measures the distance from the surface of the material in the width direction of conveyor 11 to the sensor 30. By measuring the conveyor profile when no material is present and taking the difference, height information for the material in the width direction can be acquired. In the present embodiment, the height information across the width direction is averaged to determine the layer thickness. The definition of layer thickness is not limited to this, and a plurality of indexes correlated with layer thickness exist. For example, since the relative position between the conveyor 11 and the laser rangefinder remains unchanged, the distance data from the laser rangefinder to the raw material surface can be used directly as an index. The brightness of the camera image may be used. For example, a camera can be prepared and used as another sensor to capture an image of the raw material surface, and the average brightness of the image can serve as an index. This is because the average brightness corresponds to the effective distance to the raw material surface, since brightness correlates with the distance to the raw material surface. The conveyance amount of raw material can also be used as an index correlated with layer thickness. The hourly conveyance amount is determined by the speed of the conveyor 11 and the weight of the raw material on the conveyor 11. The unit of the conveyance amount is t/h. When the speed of conveyor 11 is constant, the conveyance amount is determined by the raw material weight measured by a load cell. This raw material weight is determined by the discharge amount of raw material from the hopper in the preceding stage. Therefore, a higher weight means that more raw material is loaded onto the conveyor 11, effectively increasing the layer thickness. However, the device measuring the weight of conveyor 11 is a device that measures the weight of raw materials over a fixed section and cannot detect the moment-to-moment deposition variation and raw material layer thickness variation along the conveyance direction of the conveyor 11. Therefore, while it is possible to use this device as another sensor and use the raw material conveyance amount as an index related to layer thickness, utilizing a separate sensor capable of continuous measurement, such as a laser rangefinder or camera as the sensor 30, is preferable, since doing so allows for the detection of finer layer thickness variations, thereby improving the accuracy of the correction.

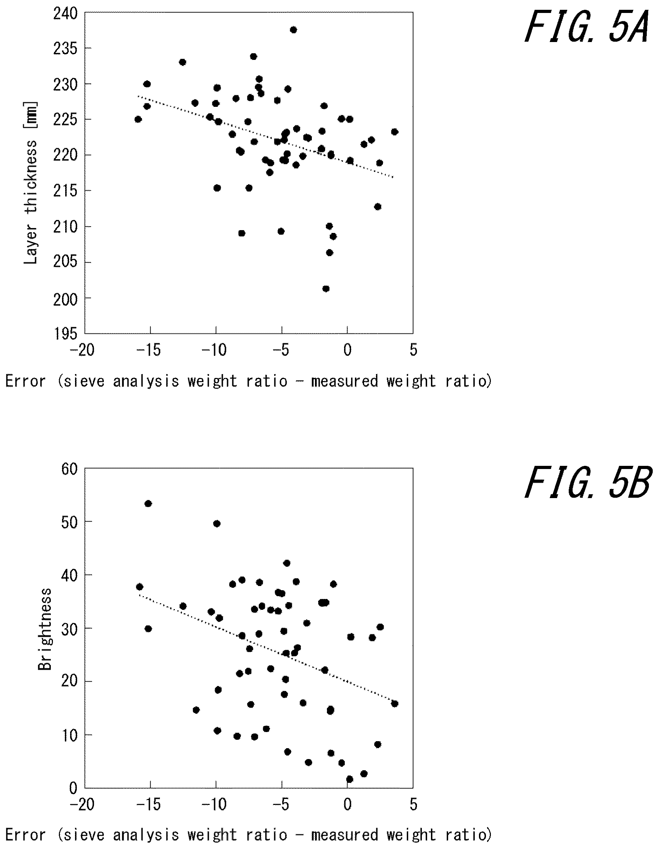

FIGS. 5A to 5F illustrate that the relationship between the particle size of the surface layer and the particle size of the entire layer, including the lower layer, changes depending on the variation in layer thickness or in an index correlated with layer thickness, such as brightness or conveyance amount, in the case of using a laser rangefinder for granulated particles and the case of using a camera for ore, respectively.

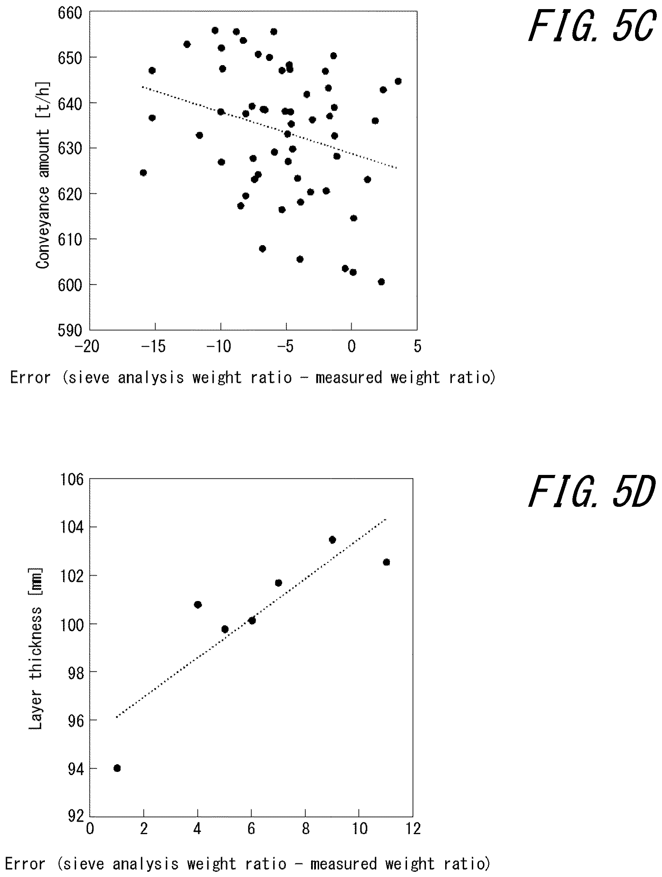

FIGS. 5A to 5C illustrate the results of similarly verifying the distance data of the granulated particles obtained using a laser rangefinder. FIG. 5A illustrates the relationship between the difference, i.e., the error, between the sieve analysis value and the measured value for the weight ratio of the particle size category of 4.75 mm or more and 8 mm or less, and the layer thickness. A correlation of R = -0.40 was observed between error and layer thickness, indicating that the layer thickness influences the relationship between the surface layer particle size and the entire layer particle size. The fact that error can be explained by layer thickness indicates that using layer thickness can reduce errors and improve accuracy. FIG. 5B illustrates the relationship between error and brightness. A correlation of R = -0.37 was observed between error and brightness, indicating that brightness influences the relationship between the surface layer particle size and the entire layer particle size. FIG. 5C illustrates the relationship between error and conveyance amount. A correlation of R = -0.38 was observed between error and conveyance amount, indicating that the conveyance amount influences the relationship between the surface layer particle size and the entire layer particle size. These results indicate that, similar to layer thickness, using either brightness or conveyance amount as an index can reduce errors and improve accuracy.

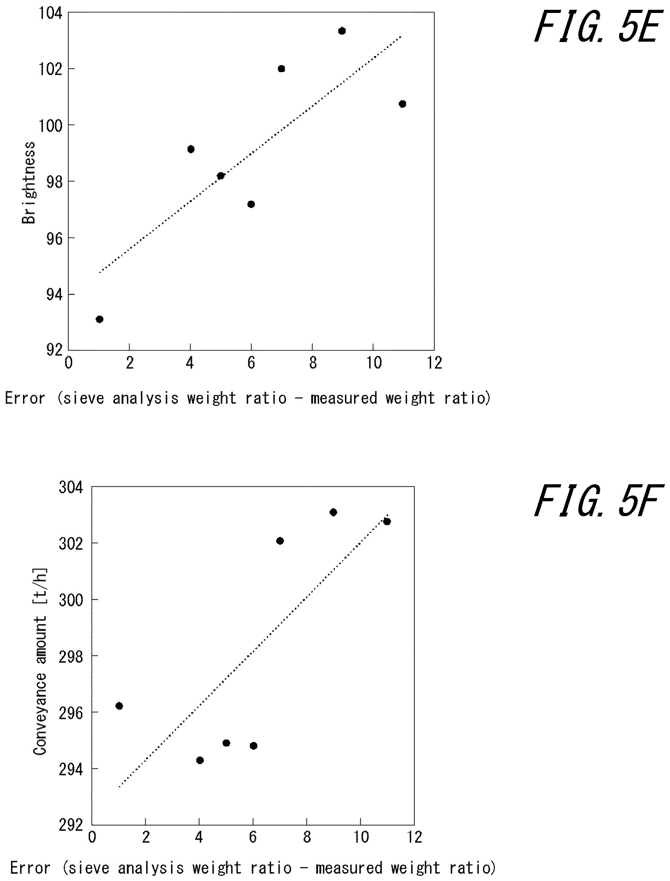

FIGS. 5D to 5F illustrate the results of similarly verifying camera images of ore. FIG. 5D illustrates the relationship between the difference, i.e., the error, between the sieve analysis value and the measured value for the weight ratio of the particle size category of 15 mm or more and 20 mm or less, and the layer thickness. A correlation of R = 0.60 was observed between error and layer thickness, indicating that the layer thickness influences the relationship between the surface layer particle size and the entire layer particle size. FIG. 5E illustrates the relationship between error and brightness. A correlation of R = 0.58 was observed between error and brightness, indicating that brightness influences the relationship between the surface layer particle size and the entire layer particle size. FIG. 5F illustrates the relationship between error and conveyance amount. A correlation of R = 0.47 was observed between error and conveyance amount, indicating that the conveyance amount influences the relationship between the surface layer particle size and the entire layer particle size. These results demonstrate that in both the laser distance measurement and camera imaging measurement methods, error can be reduced and accuracy enhanced by using either the layer thickness or one of brightness and conveyance amount as an index.

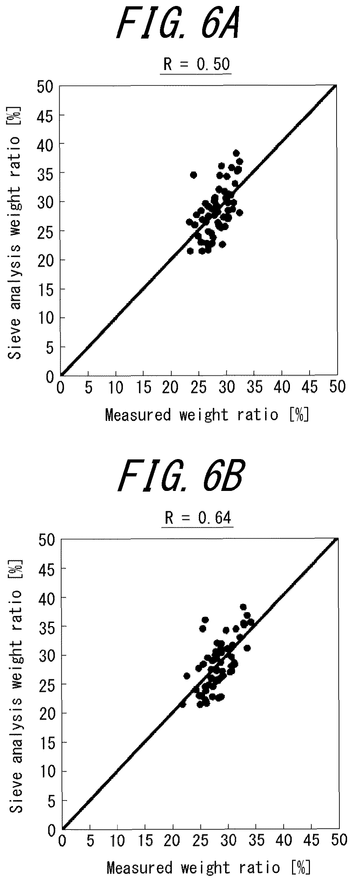

FIGS. 6A to 6H illustrate the results of correcting the measured weight ratio for a certain particle size category in the case of using a laser rangefinder for granulated particles and the case of using a camera for ore, respectively.

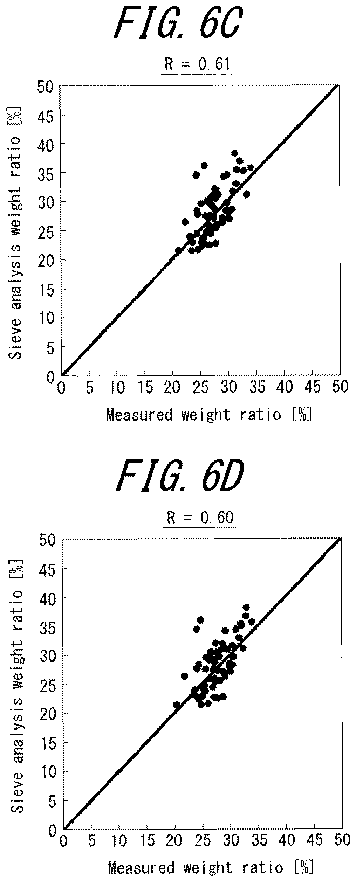

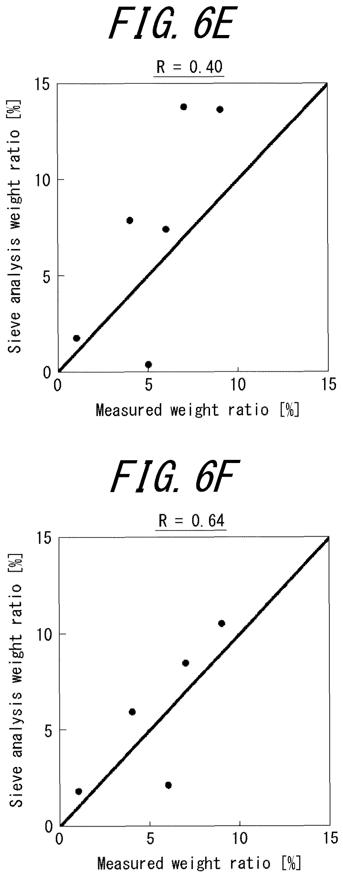

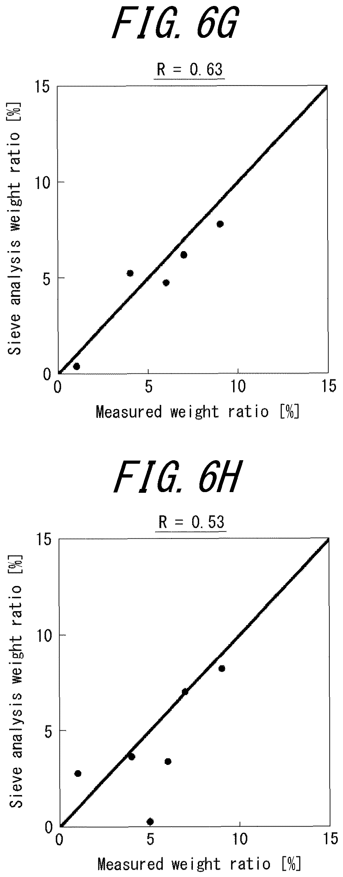

FIGS. 6A to 6D illustrate the results obtained for the distance data of the granulated particles obtained by the laser rangefinder. FIGS. 6E to 6H illustrate the results obtained for camera images of ore. The correction method used was multiple regression. The actual sieve analysis values were used as true values, and regression coefficients were determined based on the measured particle size distribution and layer thickness information to perform estimation. Any estimation method can be applied as long as it is a method of performing calculations based on measured values and layer thickness information. FIG. 6A illustrates the results of linear regression correction applied to the uncorrected measurements using sieve analysis values. FIG. 6B illustrates the results of linear regression correction applied to the measured values, which were corrected based on the layer thickness, using sieve analysis values. FIG. 6C illustrates the results of linear regression correction applied to the measured values, which were corrected based on the brightness, using sieve analysis values. FIG. 6D illustrates the results of linear regression correction applied to the measured values, which were corrected based on the conveyance amount, using sieve analysis values. The correlation coefficient R is 0.50 in FIG. 6A but is 0.64 in FIG. 6B, which confirms a significant improvement in accuracy. FIGS. 6C and 6D also illustrate improved accuracy with R = 0.61 and R = 0.60, respectively. FIG. 6E illustrates the results of linear regression correction applied to the uncorrected measurements using sieve analysis values. FIG. 6F illustrates the results of linear regression correction applied to the measured values, which were corrected based on the layer thickness, using sieve analysis values. FIG. 6G illustrates the results of linear regression correction applied to the measured values, which were corrected based on the brightness, using sieve analysis values. FIG. 6H illustrates the results of linear regression correction applied to the measured values, which were corrected based on the conveyance amount, using sieve analysis values. The correlation coefficient R is 0.40 in FIG. 6E but is 0.64 in FIG. 6F, which confirms a significant improvement in accuracy. FIGS. 6G and 6H also illustrate improved accuracy with R = 0.63 and R = 0.53, respectively. These results demonstrate that both measurement methods, i.e., laser distance measurement and camera imaging, can achieve high-precision particle diameter measurement.

In the present embodiment, the measured individual particle diameters were aggregated into particle size categories and corrected, but other methods may also be employed. For example, all the individual measured particle diameter values may be averaged to determine the measured average diameter, and the relationship between the measured layer thickness, the measured average diameter, and the sieve analysis average diameter may be determined in advance to perform correction. Correction can be applied to all indexes determined from the individual measured particle diameters. Instead of the weight ratio for each particle size category, a similar method may be applied to the weight of the particle size category itself.

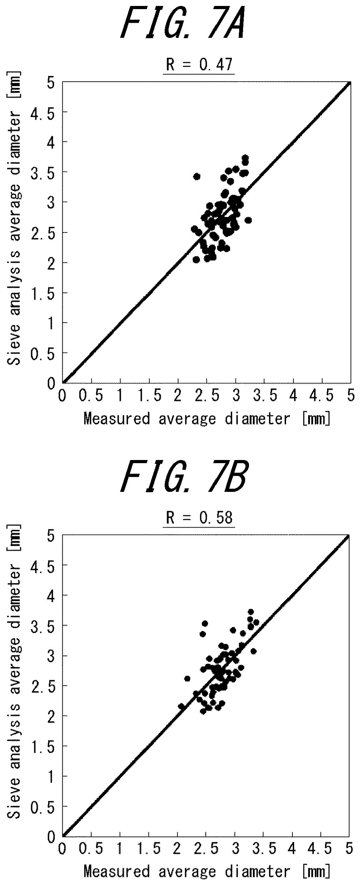

FIGS. 7A to 7H illustrate the results of correcting the average diameter in the case of using a laser rangefinder for granulated particles and the case of using a camera for ore, respectively.

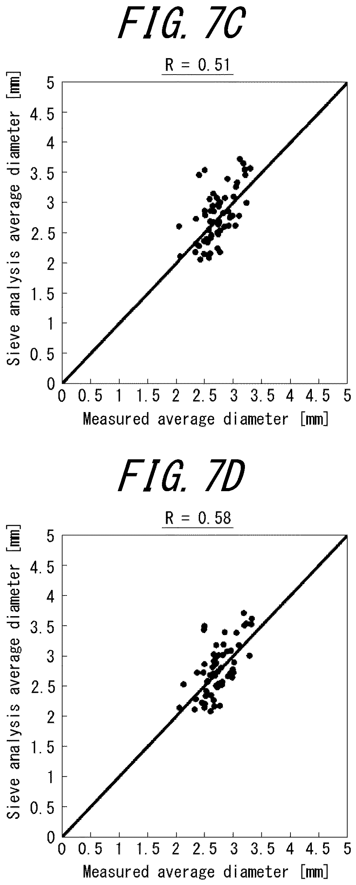

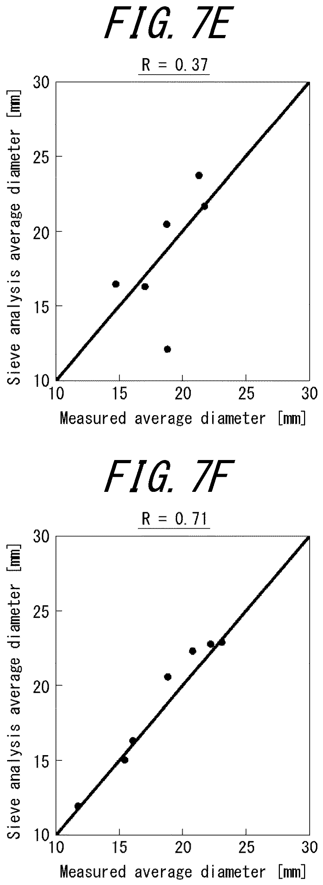

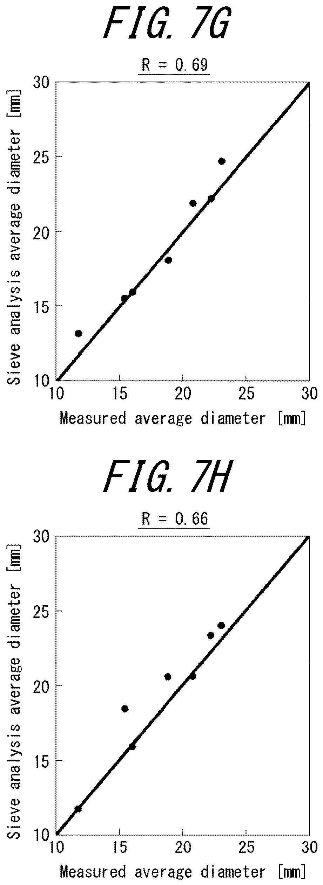

FIGS. 7A to 7D illustrate the results obtained for the distance data of the granulated particles obtained by the laser rangefinder. FIGS. 7E to 7H illustrate the results obtained for camera images of ore. The correction method used was multiple regression. The actual sieve analysis values were used as true values, and regression coefficients were determined based on the measured particle size distribution and layer thickness information to perform estimation. Any estimation method can be applied as long as it is a method of performing calculations based on measured values and layer thickness information. FIG. 7A illustrates the results of linear regression correction applied to the uncorrected measurements using sieve analysis values. FIG. 7B illustrates the results of linear regression correction applied to the measured values, which were corrected based on the layer thickness, using sieve analysis values. FIG. 7C illustrates the results of linear regression correction applied to the measured values, which were corrected based on the brightness, using sieve analysis values. FIG. 7D illustrates the results of linear regression correction applied to the measured values, which were corrected based on the conveyance amount, using sieve analysis values. The correlation coefficient R is 0.47 in FIG. 7A but is 0.58 in FIG. 7B, which confirms a significant improvement in accuracy. FIGS. 7C and 7D also illustrate improved accuracy with R = 0.51 and R = 0.58, respectively. FIG. 7E illustrates the results of linear regression correction applied to the uncorrected measured values using sieve analysis values. FIG. 7F illustrates the results of linear regression correction applied to the measured values, which were corrected based on the layer thickness, using sieve analysis values. FIG. 7G illustrates the results of linear regression correction applied to the measured values, which were corrected based on the brightness, using sieve analysis values. FIG. 7H illustrates the results of linear regression correction applied to the measured values, which were corrected based on the conveyance amount, using sieve analysis values. The correlation coefficient R is 0.37 in FIG. 7E but is 0.71 in FIG. 7F, which confirms a significant improvement in accuracy. FIGS. 7G and 7H also illustrate improved accuracy with R = 0.69 and R = 0.66, respectively. These results demonstrate that both measurement methods, i.e., laser distance measurement and camera imaging, can achieve high-precision particle diameter measurement.

Instead of corrections under operating conditions, corrections may be made under raw material conditions, or under both raw material conditions and operating conditions. Among the indexes representing the state of raw material deposition, indexes other than layer thickness, such as widthwise spread, may be used.

A method for utilizing the present embodiment in operations will now be described.

In sintering plants, it is generally desirable for granulated particles after granulation to be large in size, consistently uniform over time, and have a uniform individual particle diameter. However, due to variations in raw material properties prior to granulation, such as the influence of incoming moisture, which is difficult to identify, the particle diameter of the granulated particles after granulation may vary over time and become smaller than the desired particle diameter, even though a consistent operation amount is maintained during operation. As a result, loading of the granulated particles into the sintering machine may cause ventilation instability or reduction, potentially leading to the manufacturing of low-quality sintered ore.

By using the information processing method according to the present embodiment, it is possible to constantly identify the particle diameter of granulated particles. By changing the operating factors that affect particle diameter, it is possible to control the particle diameter to a desired level and reduce fluctuations in particle diameter. Specifically, in the sintered ore manufacturing method, it is conceivable to adjust the blending ratio of at least one type of raw material among the three types of sintering blend raw materials including iron-containing raw materials, auxiliary raw materials, and carbon-containing raw materials, using the index Zi outputted for each observation time in S5. By controlling the particle diameter after granulation according to such a sintered ore manufacturing method, stable ventilation is achieved when the granulated particles are charged into the sintering machine, making it possible to manufacture high-quality sintered ore. Alternatively, in the sintered ore manufacturing method, it is conceivable to adjust at least one operating condition of the granulator among the three operating conditions of rotation speed, residence time, and added moisture, using the index Zi outputted for each observation time in S5. According to such a sintered ore manufacturing method, it is also possible to control the particle diameter to a desired level, thereby making it possible to manufacture high-quality sintered ore.

The method of loading the granulated particles into the sintering machine after granulation is also important. After granulation, the granulated particles are stored in a surge hopper and then fed onto the pallet of the sintering machine via a drum feeder and a chute or drum chute. The distribution of particle diameter in the vertical direction of granulated particles deposited on the pallet after granulation preferably remains constant over time. However, if the variation in particle diameter after granulation changes, and the loading method into the sintering machine is not altered, the height-direction distribution of particle diameter of the granulated particles deposited on the pallet will change. As a result, the ventilation of the sintering machine is likely to become unstable or deteriorate. The quality of the manufactured sintered ore may deteriorate due to unstable or reduced ventilation.

In the sintered ore manufacturing method, it is conceivable to adjust at least one operating condition of the raw material charging device among the three operating conditions of drum feeder rotation speed, chute angle, and drum chute rotation speed, using the index Zi outputted for each observation time in S5. According to such a sintered ore manufacturing method, the ventilation is stabilized by adjusting the temporal change in the particle size variation in the height direction of the raw material, deposited on the pallet of the sintering machine, to a constant value. As a result, high-quality sintered ore can be manufactured.

Another method for utilizing the present embodiment in operations will now be described.

In a blast furnace, iron raw material, which contains mainly iron oxide, and coke are alternately charged from the furnace top. Hot blast blown in from the tuyere at the bottom of the furnace ignites the coke. The resulting reducing gas, which contains CO, reduces the iron oxide in sintered ore or lump ore to manufacture pig iron. Therefore, to ensure the permeability of the blast furnace, it is important to specify the particle diameter, particle shape, or particle size distribution of the raw materials charged into the blast furnace and to perform raw material charging in a manner that ensures the formation of voids between the coke.

By using the information processing method according to the present embodiment, the particle diameter, particle shape, or particle size distribution of raw materials can be accurately measured on the conveyor 11 before blast furnace charging, and the results can be reflected in the blast furnace operation method, i.e., in the charging amount or charging distribution of the raw materials. Stable operation can thereby be expected with permeability of the blast furnace ensured. That is, in the blast furnace operation method, it is conceivable to adjust the operating conditions of the blast furnace into which raw materials are charged, using the index Zi outputted for each observation time at S5. Specifically, by adjusting the blast air flow rate, which represents the hot blast volume supplied from the blast furnace tuyere, or the coke ratio, which represents the amount of coke used to manufacture one tonne of hot metal, according to particle size, it is possible to stabilize the ventilation of the blast furnace.

Yet another method for utilizing the present embodiment in operations will now be described.

Coke used in blast furnaces is required to have high strength, with no variation in strength or particle size, i.e., uniform quality, to ensure proper permeability inside the furnace. To manufacture high-strength coke with uniform quality, it is necessary to increase the bulk density of coal charged into the coke oven, so that firm contact occurs between coal particles during heating and dry distillation in the coke oven. To this end, it is crucial to optimize the particle size of coal charged into the coke oven. When subjecting coal to a pulverizing process in a pulverizer, it is necessary to select pulverizing conditions that achieve the target particle size and reduce the variation in particle size. Therefore, in the coke manufacturing process, it is conceivable to adjust the rotation speed of the coal pulverizer using the index Zi outputted for each observation time in S5. Specifically, by measuring the particle size distribution of the coal raw material at either or both the front and rear of the pulverizer using the information processing method according to the present embodiment, and then controlling either the motor current value of the pulverizer or the hammer rotation speed, the pulverized coal particle size can be adjusted to the target particle size. As a result, high-strength, high-quality coke can be manufactured.

The present disclosure is not limited to the embodiments described above. For example, two or more blocks described in a block diagram may be integrated, or a block may be divided. Instead of executing two or more steps described in a flowchart in chronological order in accordance with the description, the steps may be executed in parallel or in a different order according to the processing capability of the apparatus that executes each step, or as required. Other modifications can be made without departing from the spirit of the present disclosure.

### REFERENCE SIGNS LIST

- 10: Measurement system
- 11: Conveyor
- 12: Deposited raw material
- 20: Information processing apparatus
- 21: Controller
- 22: Memory
- 23: Communication interface
- 24: Input interface
- 25: Output interface
- 30: Sensor

## Claims

1. An information processing apparatus comprising a controller configured to:
acquire observation data obtained at each observation time by use of a sensor to observe a surface layer of a deposited raw material that is sequentially conveyed;
calculate an index related to a particle diameter of each particle contained in the deposited raw material for each observation time, using the acquired observation data;
acquire measurement data obtained at each measurement time corresponding to each observation time by measuring a state of the deposited raw material;
correct the calculated index for the observation time corresponding to each measurement time, using the acquired measurement data; and
output the corrected index for each observation time.

2. The information processing apparatus according to claim 1, wherein the controller is configured to correct the index according to a dimension of the deposited raw material determined from the measurement data.

3. The information processing apparatus according to claim 2, wherein the dimension of the deposited raw material includes a layer thickness of the deposited raw material.

4. The information processing apparatus according to claim 3, wherein the controller is configured to:
acquire, as the observation data, distance data obtained by measuring a distance from the sensor to the surface layer of the deposited raw material; and
use the distance data also as the measurement data.

5. The information processing apparatus according to claim 1, wherein the controller is configured to:
acquire, as the measurement data, a camera image obtained by imaging the surface layer of the deposited raw material; and
correct the index according to a brightness of the camera image.

6. The information processing apparatus according to claim 5, wherein the controller is configured to use the camera image also as the observation data.

7. The information processing apparatus according to claim 1, wherein the controller is configured to acquire, as the measurement data, data obtained by measuring a conveyance amount of the deposited raw material.

8. The information processing apparatus according to claim 1, wherein the controller is configured to acquire, as the measurement data, data obtained by measuring a composition of the deposited raw material.

9. The information processing apparatus according to claim 8, wherein the composition of the deposited raw material includes a moisture content of the deposited raw material.

10. An information processing method comprising:
acquiring, by an information processing apparatus, observation data obtained at each observation time by use of a sensor to observe a surface layer of a deposited raw material that is sequentially conveyed;
calculating, by the information processing apparatus, an index related to a particle diameter of each particle contained in the deposited raw material for each observation time, using the acquired observation data;
acquiring, by the information processing apparatus, measurement data obtained at each measurement time corresponding to each observation time by measuring a state of the deposited raw material;
correcting, by the information processing apparatus, the calculated index for the observation time corresponding to each measurement time, using the acquired measurement data; and
outputting, by the information processing apparatus, the corrected index for each observation time.

11. A sintered ore manufacturing method comprising adjusting a blending ratio of at least one type of sintering blend raw material among three types of sintering blend raw materials comprising an iron-containing raw material, an auxiliary raw material, and a carbon-containing raw material, using the index for each observation time outputted by the information processing method according to claim 10.

12. A sintered ore manufacturing method comprising adjusting at least one operating condition of a granulator among three operating conditions comprising a rotation speed, a residence time, and an added moisture, using the index for each observation time outputted by the information processing method according to claim 10.

13. A sintered ore manufacturing method comprising adjusting at least one operating condition of a raw material charging device among three operating conditions comprising a drum feeder rotation speed, a chute angle, and a drum chute rotation speed, using the index for each observation time outputted by the information processing method according to claim 10.

14. A blast furnace operation method comprising adjusting operating conditions of a blast furnace into which raw material is charged, using the index for each observation time outputted by the information processing method according to claim 10.

15. A coke manufacturing method comprising adjusting a rotation speed of a coal pulverizer, using the index for each observation time outputted by the information processing method according to claim 10.

16. A program configured to cause a computer to execute operations comprising:
acquiring observation data obtained at each observation time by use of a sensor to observe a surface layer of a deposited raw material that is sequentially conveyed;
calculating an index related to a particle diameter of each particle contained in the deposited raw material for each observation time, using the acquired observation data;
acquiring measurement data obtained at each measurement time corresponding to each observation time by measuring a state of the deposited raw material;
correcting the calculated index for the observation time corresponding to each measurement time, using the acquired measurement data; and
outputting the corrected index for each observation time.
